Europäisches Patentamt

European Patent Office

Office européen des brevets

(19)

(11) Numéro de publication: **0 286 470 B1**

(12) **FASCICULE DE BREVET EUROPEEN**

(45) Date de publication du fascicule du brevet:
**07.11.90**

(21) Numéro de dépôt: **88400578.6**

(22) Date de dépôt: **11.03.88**

(51) Int. Cl.⁵: **B24B 13/005**, B29C 33/00,
B29C 67/18

(54) Moule pour la fixation d'un bloc métallique sur l'une des faces d'une lentille ophtalmique.

(30) Priorité: **30.03.87 FR 8704374**

(43) Date de publication de la demande:
**12.10.88 Bulletin 88/41**

(45) Mention de la délivrance du brevet:
**07.11.90 Bulletin 90/45**

(84) Etats contractants désignés:
**AT DE ES GB NL**

(56) Documents cités:
**EP-A- 0 169 932**
**FR-A- 2 204 990**
**FR-A- 2 409 849**
**FR-A- 2 465 562**

(73) Titulaire: **ESSILOR INTERNATIONAL, Cie Générale d'Optique, 1 Rue Thomas Edison, Echat 902, F-94028 Créteil Cédex(FR)**

(72) Inventeur: **Herbin, Patrick, Rue du Chateau, F-55500 Morlaincourt(FR)**
Inventeur: **Lacroix, Jean-Claude, 4 rue Jean Moulin, F-55500 Ligny-en-Barrois(FR)**

(74) Mandataire: **Lefebure, Gérard et al, Office Blétry 2, boulevard de Strasbourg, F-75010 Paris(FR)**

**Description**

La présente invention concerne un moule pour la fixation d'un bloc métallique sur l'une des faces d'une lentille ophtalmique, comportant une cavité ouverte de moulage ayant une paroi de fond et une paroi latérale cylindrique.

Dans le domaine de la fabrication et de la préparation des lentilles ophtalmiques, il est connu de fixer sur l'une des faces des lentilles un bloc métallique au moyen duquel la lentille peut être montée sur le porte-lentille d'une machine à surfacer, d'une machine à déborder ou d'une machine à doucir ou à polir. Cette opération, connue sous le nom d'opération de "blocage" ou "glantage" est usuellement effectuée au moyen d'un appareil comportant un moule du genre défini plus haut, qui correspond au préambule de la revendication 1, dans la cavité de moulage duquel est coulé un métal à bas point de fusion. Un tel appereil est par exemple décrit dans le brevet FR 2 465 562. Comme cela est visible dans la figure 2 de ce brevet français, le moule 3 est équipé d'une bague amovible 7, qui comporte un siège annulaire 9 et un rebord périphérique cylindrique 11, qui sont tous les deux coaxiaux à l'axe de la cavité de moulage. Le siège annulaire 9 est prévu pour supporter la face de la lentille sur laquelle un bloc métallique doit être fixé, tandis que le rebord périphérique 11, qui a un diamètre intérieur correspondant au diamètre extérieur de la lentille, est prévu pour centrer ladite lentille par rapport à la cavité de moulage. Avec un tel moule connu, il est nécessaire de prévoir plusieurs bagues, dont les rebords périphériques ont des diamètres intérieurs différents correspondant respectivement aux différents diamètres de lentilles ophtalmiques existantes, et il faut changer de bague chaque fois que le diamètre de la lentille à laquelle un bloc métallique va être fixé est différent du diamètre de la lentille à laquelle un bloc métallique vient d'être fixé. Un tel changement de bague s'oppose à une automatisation complète des opérations de blocage. En outre, les bagues susmentionnées sont des éléments relativement coûteux dans la mesure où le diamètre intérieur de leur rebord périphérique doit être usiné avec une précision relativement grande pour assurer un centrage précise de la lentille par rapport à la cavité du moule.

La présente invention a donc pour but de fournir un moule unique, dont la cavité de moulage peut recevoir des lentilles ophtalmiques de n'importe quel diamètre existant, et dont l'élément qui vient en contact avec la périphérie de la lentille, n'a pas besoin d'être usiné avec une grande précision.

A cet effet, le moule de la présente invention est caractérisé en ce que la paroi latérale cylindrique de la cavité de moulage a un diamètre intérieur plus grand que le plus grand diamètre existant de lentille ophtalmique, et en ce qu'une membrane en gros cylindrique, en une matière élastomère, est disposée concentriquement à l'intérieur de la cavité de moulage et définit avec la paroi latérale cylindrique de ladite cavité une chambre annulaire à volume variable, ladite membrane étant expansible et rétractable radialement par l'action d'un fluide alternativement extrait de ladite chambre annulaire et introduit dans celle-ci.

Suivant une forme d'exécution de la présente invention, la membrane est de préférence en latex et ella a, à l'état de repos, un diamètre intérieur plus petit que le plus petit diamètre existant de lentille ophtalmique. Dans ce cas, pour la mise en place d'une lentille dans la cavité de moulage, on fait le vide dans la chambre annulaire à volume variable. Ceci a pour effet d'augmenter le diamètre intérieur de la membrane qui vient pratiquement en contact avec la paroi latérale cylindrique du moule. Une fois que la lentille a été introduite dans la cavité du moule, la pression atmosphérique est rétablie dans la chambre annulaire à volume variable, de telle sorte que la membrane tend, par son élasticité propre, à reprendre sa forme initiale et, ce faisant, elle vient en contact avec le bord périphérique de la lentille pour l'enserrer étroitement, quel que soit le diamètre extérieur de la lentille. Bien qu'en principe cela ne soit pas absolument indispensable, de l'air comprimé sous faible pression peut être éventuellement introduit dans la chambre annulaire à volume variable pour aider la membrane à reprendre sa forme initiale. Après la coulée d'un métal à bas point de fusion dans la cavité de moulage à travers un orifice de coulée prévu dans la paroi de fond de ladite cavité, et après refroidissement du métal, on fait à nouveau le vide dans la chambre annulaire à volume variable pour écarter la membrane du bord périphérique de la lentille et du bloc métallique coulé, pour permettre l'extraction de ladite lentille avec ledit bloc métallique.

Suivant une autre forme d'exécution de la présente invention, la membrane en matière élastomère peut avoir, à l'état de repos, un diamètre intérieur plus grand que le plus grand diamètre existant de lentille ophtalmique. Dans ce cas, une fois qu'une lentille a été introduite dans la cavité du moule, un fluide sous pression, par exemple de l'air comprimé, est injecté dans la chambre annulaire à volume variable, afin d'obliger la membrane à enserrer étroitement le bord périphérique de la lentille. Après la coulée et le refroidissement du métal à bas point de fusion dans la cavité de moulage, le fluide sous pression est évacué de la chambre annulaire à volume variable, par exemple en mettant celle-ci à la pression atmosphérique, et la membrane tend, par son élasticité propre, à reprendre sa forme initiale, en étant éventuellement aidé par une mise en légère dépression de ladite chambre annulaire à volume variable.

On décrira maintenant une forme préférée d'exécution de la présente invention en faisant référence au dessin annexé sur lequel:

La figure 1 est une vue en coupe verticale d'un moule conforme à la presente invention.
La figure 2 est une vue en coupe suivant la ligne II-II de la figure 1, montrant, à plus grande échelle, un détail de la membrane du moule de la figure 1.

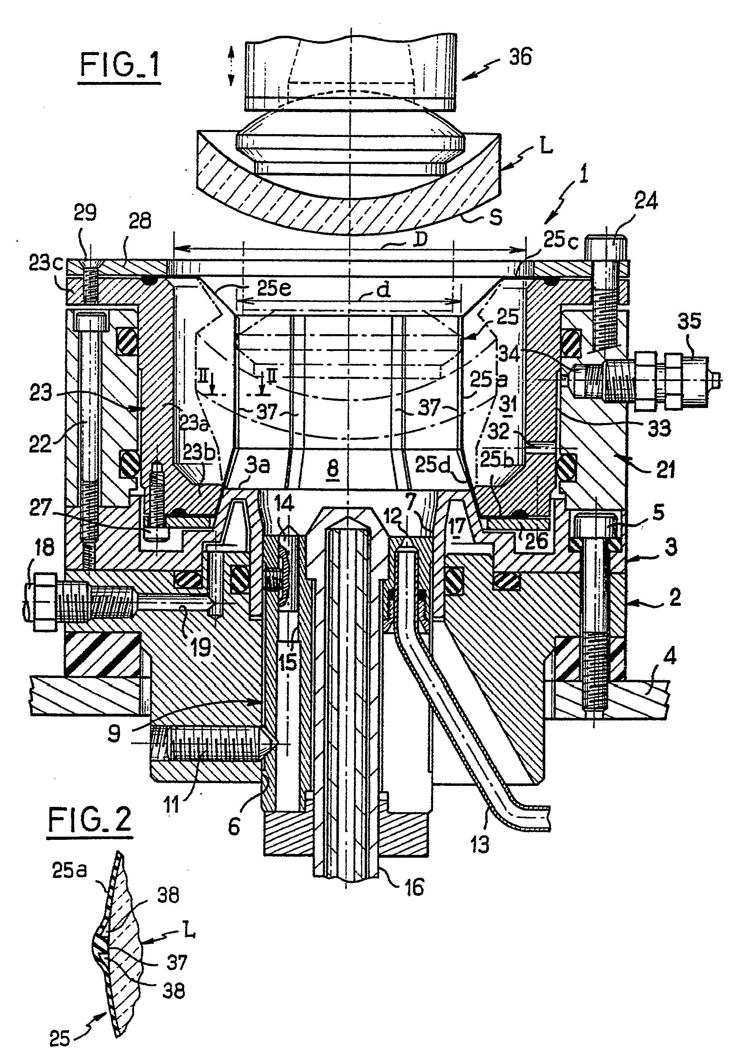

Le moule 1 montré dans la figure 1 comprend deux éléments superposées 2 et 3, ayant en gros une forme annulaire, qui sont fixés coaxialement l'un à l'autre et a une plaque de support 4 par des vis 5 (une seule vis 5 est visible dans la figure 1). Les trous centraux 6 et 7 des éléments 2 et 3 sont alignés et ont le même diamètre intérieur. L'élément 3 forme une partie de la paroi de fond de la cavité de moulage 8, la partie restante de la paroi de fond de ladite cavité étant formée par la face d'extrémité supérieure d'un élément cylindrique 9 engagé étroitement dans les trous 6 et 7 et fixé à l'élément 2 par une vis de blocage 11. Un métal à bas point de fusion peut être introduit dans la cavité de moulage 8 à travers un orifice de coulée 12 de l'élément 9, qui est raccordé par un tuyau 13 à un réservoir (non montré) contenant le métal en fusion. De préférence, l'orifice 12 a une forme tronconique, la petite base du tronc de cône étant du côté de la cavité 8 et la grande base du côté du tuyau 13. Un plot cylindrique 14 est fixé dans un trou cylindrique excentré 15 de l'élément 9. Le plot 14 a une extrémité supérieure conique qui fait saillie à l'intérieur de la cavité de moulage 8 et qui est destinée à former, de façon connue, dans le bloc métallique coulé dans la cavité 8 une empreinte permettant ultérieurement une indexation angulaire dudit bloc métallique sur le porte-lentille d'une machine à surfacer, d'une machine à déborder ou d'une machine à polir. Une tige 16 est montée coulissante dans un trou central de l'élément 9 et permet, de façon connue, d'éjecter le bloc métallique coulé (et la lentille y attenante) après refroidissement dudit bloc métallique, lorsque la tige 16 est soulevée.

Comme montré dans la figure 1, les éléments 2 et 3 sont conformés de manière à former entre eux une chambre annulaire 17 dans laquelle circule un fluide de refroidissement, qui arrive à travers un raccord 18 et un passage 19 de l'élément 2, et qui ressort par un autre passage et par un autre raccord (non montrés) semblables au passage 19 et au raccord 18.

Le moule 1 comprend en outre un élément 21, de forme cylindrique, qui est fixé coaxialement de manière détachable, par des vis 22, à l'élément 3, et un autre élément 23, en gros cylindrique, qui est fixé de manière détachable par des vis 24 à l'élément 21. L'élément 23 comporte une partie cylindrique 23a, qui est engagée étroitement dans l'élément 21 et dont le diamètre intérieur D est plus grand que le plus grand diamètre existant de lentille ophtalmique (actuellement 80mm). A son extrémité inférieure, près du fond de la cavité de moulage 8, la partie cylindrique 23a de l'élément 23 comporte une bride annulaire 23b qui s'étend radialement vers l'intérieur et qui entoure étroitement une partie en saillie 3a de l'élément 3. A son extrémité supérieure, c'est-à-dire près de l'ouverture de la cavité de moulage 8, la partie cylindrique 23a de l'élément 23 comporte une bridge annulaire 23c qui s'étend radialement vers l'extérieur.

Une membrane 25, en une matière élastomère, par exemple en latex, est disposée concentriquement à l'intérieur de la cavité de moulage 8. La membrane 25 peut avoir une épaisseur comprise entre 0,5 et 1mm et elle comporte une partie cylindrique 25a et, à ses extrémités, des parties annulaires planes 25b et 25c qui s'étendent radialement vers l'extérieur. La partie 25b de la membrane 25 est fixée par pincement entre la bride 23b de l'élément 23 et une rondelle 26, elle-même fixée à l'élément 23 par des vis 27 (une seule vis 27 est visible dans la figure 1). De même, la partie 25c de la membrane 25 est fixée par pincement entre la bride 23c de l'élément 23 et une autre rondelle 28, elle-même fixée à la bride 23c par des vis 29 (une seule vis 29 est visible dans la figure 1).

De préférence, la partie cylindrique 25a de la membrane 25 est raccordée aux parties annulaires planes 25b et 25c par deux parties tronconiques 25d et 25e, respectivement, qui sont évasées l'une vers le fond de la cavité de moulage, l'autre vers l'extérieur de ladite cavité. Dans ce cas, la partie en saillie 3a de l'élément 3 et le trou central de la bride 23b ont une forme tronconique, qui a la même conicité que la partie tronconique 25d de la membrane 25, qui est prise en sandwich entre la partie 3a de l'élément 3 et la bride annulaire 23b.

La membrane 25 définit avec l'élément 23 du moule une chambre annulaire 31 à volume variable. Dans la forme d'exécution représentée dans la figure 1, la partie cylindrique 25a de la membrane 25 a, à l'état de repos, un diamètre intérieur d plus petit que le plus petit diamètre existant de lentille ophtalmique. Le vide peut être fait dans la chambre 31 à travers un passage comprenant un premier perçage radial 32 dans la partie cylindrique 23a de l'élément 23, une chambre annulaire 33 prévue entre les éléments 21 et 23, et un second perçage radial 34 dans l'élément 21. Le perçage 34 est taraudé sur une partie de sa longueur et reçoit un raccord 35 relié par un tuyau (non montré) à une source de vide (également non montrée).

Pour la fixation d'un bloc métallique sur l'une des faces d'une lentille ophtalmique, par exemple la face convexe S de la lentille L de la figure 1, ladite lentille est tout d'abord positionnée et orientée (axe de prisme dans le cas d'une lentille prismatique, axe de cylindre dans le cas d'une lentille torique,...) par rapport à un système de référence, au moyen d'un dispositif de positionnement et d'orientation (non montré) situé à côté du moule. Ensuite, la lentille L est saisie par un dispositif de préhension 36 (figure 1), du type à succion, qui fait partie d'un système de transfert, et elle est amenée par ce dernier au-dessus de l'ouverture de la cavité de moulage 8 avec la position et l'orientation prédéfinies. On fait alors le vide dans la chambre 31 à volume variable afin d'expanser radialement vers l'extérieur la membrane 25, jusqu'à ce qu'elle soit pratiquement en contact avec la paroi interne de l'élément 23. Ensuite, la lentille L est introduite dans la cavité de moulage 8, jusque dans la position représentée en trait mixte dans la figure 1, à l'aide du système de transfert susmentionné et elle y est maintenue avec la position et l'orientation prédéfinies. Ensuite, la pression atmosphérique est rétablie dans la chambre 31 afin que la membrane 25, en reprenant sa forme initiale par son élasticité propre, vienne enserrer étroitement le bord périphérique de la lentille L. Un métal à bas point de fusion est alors coulé dans la cavité 8 à travers le tuyau 13 et l'orifice de coulée 12. Afin de permettre à l'air emprisonné dans la cavité 8 de s'échapper, au moins la partie cylindrique 25a de la membrane 25 comporte, du côté intérieur, des nervures longitudinales 37 de faible dimension radiale, par exemple six nervures dont quatre sont visibles dans la figure 1. De cette manière, lorsque la membrane 25 est appliquée contre le bord périphérique de la lentille L, deux passages 38 de faible section sont ménagés de part et d'autre de chaque nervure 37 pour l'échappement de l'air contenu dans la cavité 8 lorsque celle-ci est rempli de métal en fusion.

Après refroidissement du métal, on fait à nouveau le vide dans le chambre 31 afin d'expanser radialement vers l'extérieur la membrane 25. Ceci a pour effet de démouler partiellement le bloc métallique coulé dans la cavité 8. Ensuite, le bloc métallique et la lentille 8 y attenante sont détachés du fond de la cavité de moulage 8 au moyen de la tige d'éjection 16 et évacués hors de la cavité de moulage au moyen du dispositif de préhension 36 et du système de transfert. Le moule 1 est alors prêt pour recevoir une autre lentille.

Il va de soi que la forme d'exécution de la présente invention qui a été décrite ci-dessus a été donnée à titre d'exemple purement indicatif et nullement limitatif, et que de nombreuses modifications peuvent être facilement apportées par l'homme de l'art. C'est ainsi notamment que, comme cela a déjà été indiqué plus haut, la partie cylindrique 25a de la membrane 25 peut avoir, à l'état de repos, un diamètre intérieur d plus grand que le plus grand diamètre existant de lentille opthtalmique. Dans ce cas, la membrane 25 enssera le bord périphérique de la lentille L en introduisant de l'air comprimé dans la chambre 31 à volume variable.

## Revendications

1.- Moule pour la fixation d'un bloc métallique sur l'une des faces d'une lentille ophtalmique, comportant une cavité ouverte de moulage (8) ayant une paroi de fond et une paroi latérale cylindrique, caractérisé en ce que la paroi latérale cylindrique de la cavité de moulage (8) a un diamètre intérieur (D) plus grand que le plus grand diamètre existant de lentille ophtalmique, et en ce qu'une membrane (25) en gros cylindrique, en une matière élastomère, est disposée concentriquement à l'intérieur de la cavité de moulage et définit avec la paroi latérale cylindrique de ladite cavité une chambre annulaire (31) à volume variable, ladite membrane étant expansible et rétractable radialement par l'action d'un fluide alternativement extrait de ladite chambre annulaire et introduit dans celle-ci.

2.- Moule selon la revendication 1, caractérisé en ce que la membrane cylindrique (25) est en latex et a une épaisseur comprise entre 0,5mm et 1mm.

3.- Moule selon la revendication 1 ou 2, caractérisé en ce que la membrane cylindrique (25) a, à l'état de repos, un diamètre intérieur (d) plus petit que le plus petit diamètre existant de lentille ophtalmique.

4.- Moule selon la revendication 3, caractérisé en ce que la membrane cylindrique (25) comprend une partie cylindrique (25a) et, à chaque extrémité de la partie cylindrique, une partie annulaire plane (25b,25c) s'étendant radialement vers l'extérieur vers la paroi latérale cylindrique de la cavité de moulage (8), les deux parties annulaires planes (25b,25c) de la membrane (25) étant fixées au moule respectivement dans la région du fond et dans la région de l'ouverture de la cavité de moulage (8).

5.- Moule selon la revendication 4, caractérisé en ce que la partie cylindrique (25a) de la membrane (25) comporte, du côté intérieur, des nervures longitudinales (37) de faible dimension radiale.

6.- Moule selon la revendication 4 ou 5, caractérisé en ce que la membrane (25) comporte deux parties tronconiques (25d et 25e), qui raccordent la partie cylindrique (25a) respectivement aux parties annulaires planes (25b et 25c) de la membrane et qui sont évasées l'une vers l'extérieur, l'autre vers le fond de la cavité de moulage (8).

7.- Moule selon l'une quelconque des revendications 4 à 6, caractérisé en ce que qu'il comprend un premier élément (3) formant une partie de la paroi de fond de la cavité de moulage (8), un second élément (21), de forme cylindrique creuse, qui est fixé de manière détachable au premier élément (3), un troisième élément (23), en gros cylindrique, qui est fixé de manière détachable au second élément (21) et qui comporte une partie cylindrique (23a) qui est engagée étroitement dans le second élément (21) et dont le diamètre intérieur (D) est plus grand que le plus grand diamètre existant de lentille ophtalmique, une première bride annulaire (23b), qui s'étend radialement vers l'intérieur à une extrémité de la partie cylindrique (23a) du troisième élément près du fond de la cavité de moulage, et une seconde bride annulaire (23c), qui s'étend radialement vers l'extérieur à l'autre extrémité de ladite partie cylindrique près de l'ouverture de la cavité de moulage, et des première et seconde rondelles (26 et 28) fixées de manière détachable aux première et seconde brides annulaires (23b et 23c) du troisième élément (23), chacune des deux parties annulaires planes (25b et 25c) de la membrane (25) étant pincée entre l'une des première et seconds rondelles (26 et 28) et la bride annulaire correspondanrte du troisième élément (23).

8.- Moule selon la revendication 7 rattachée à la revendication 6, caractérisé en ce que ledit premier élément (3) comporte une partie en saillie (3a), qui est engagée étroitement dans le trou central de la première bride annulaire (23b) dudit troisième élément (23), ladite partie en saillie (3a) et ledit trou central ayant une forme tronconique qui a la même conicité que l'une (25d) des deux parties tronconiques (25d et 25c) de la membrane (25), qui est prise en sandwich entre ladite partie en saillie (3a) et ladite première bride (23b).

9.- Moule selon l'une quelconque des revendications 3 à 8, caractérisé en ce qu'il comporte, dans sa paroi latérale cylindrique, un passage (32,33,34) dont une extrémité débouche dans ladite chambre annulaire (31) à volume variable et dont l'autre extrémité est raccordable (en 35) à une source de vide.

10.- Moule selon la revendication 9 rattachée à la revendication 7, caractérisé en ce que ledit passage est constitué par un premier perçage radial (32) dans la partie cylindrique (23a) du troisième élément (23), par une chambre annulaire (33) prévue entre les second et troisième éléments (21 et 23), et par un second perçage radial (34) dans le second élément (21).

## Patentansprüche

1. Form zur Befestigung eines Metallklotzes auf einer der Oberflächen einer ophthalmischen Linse bzw. eines Brillenglases mit einem offenen Formungshohlraum (8), der eine Bodenwand und eine zylindrische Seitenwand aufweist, dadurch gekennzeichnet, daß die zylindrische Seitenwand des Formungshohlraumes (8) einen Innendurchmesser (D) aufweist, der größer als der größte existierende Durchmesser des Brillenglases ist, und daß eine Membran (25), die im großen und ganzen zylindrisch ist und aus einem elastomeren Material besteht, im Inneren des Formungshohlraumes konzentrisch angeordnet ist und mit der zylindrischen Seitenwand des Hohlraumes eine Ringkammer (31) mit einem variablen Volumen bildet, wobei die Membran radial expandierbar und zusammenziehbar ist durch die Einwirkung eines Fluids, welches alternativ aus der Ringkammer abgezogen und in diese eingeführt wird.

2. Form nach Anspruch 1, dadurch gekennzeichnet, daß die zylindrische Membran (25) aus Latex besteht und eine Dicke zwischen 0,5 mm und 1 mm aufweist.

3. Form nach Anspruch 1 oder 2, dadurch gekennzeichnet, daß die zylindrische Membran (25) im Ruhezustand einen Innendurchmesser (d) aufweist, der kleiner als der kleinste existierende Durchmesser des Brillenglases ist.

4. Form nach Anspruch 3, dadurch gekennzeichnet, daß die zylindrische Membran (25) einen zylindrischen Teil (25a) und an jedem Ende des zylindrischen Teils einen ebenen ringförmigen Teil (25b, 25c) aufweist, die sich radial nach außen zu der zylindrischen Seitenwand des Formungshohlraumes (8) erstrecken, wobei die zwei ebenen ringförmigen Teile (25b, 25c) der Membran (25) an der Form in dem Bodenbereich bzw. in dem Bereich der Öffnung des Formungshohlraumes (8) befestigt sind.

5. Form nach Anspruch 4, dadurch gekennzeichnet, daß der zylindrische Teil (25a) der Membran (25) auf der Innenseite longitudinale Rippen (37) mit schwacher radialer Abmessung umfaßt.

6. Form nach Anspruch 4 oder 5, dadurch gekennzeichnet, daß die Membran (25) zwei kegelstumpfförmige Teile (25d, 25e) umfaßt, die den zylindrischen Teil (25a) jeweils mit den zwei ebenen ringförmigen Teilen (25b, 25c) der Membran verbinden und die eine zur Außenseite und die andere zum Boden des Formhohlraumes (8) erweitert sind.

7. Form nach einem der Ansprüche 4 bis 6, gekennzeichnet durch ein erstes Element (3), das einen Teil der Bodenwand des Formungshohlraumes (8) bildet, ein zweites Element (21) mit hohler zylindrischer Form, welches in lösbarer Weise an dem ersten Element (3) befestigt ist, ein im großen und ganzen zylindrisches drittes Element (23), welches in lösbarer Weise am zweiten Element (21) befestigt ist und einen zylindrischen Teil (23a) umfaßt, der in dem zweiten Element (21) eng eingepaßt ist und dessen Innendurchmesser (D) größer als der größte existierende Durchmesser des Brillenglases ist, einen ersten Flanschring (23b), der sich an einem Ende des zylindrischen Teils (23a) des dritten Elementes nahe dem Boden des Formungshohlraumes nach innen erstreckt, und einen zweiten Ringflansch (23c), der sich am anderen Ende des zylindrischen Teils nahe der Öffnung des Formungshohlraumes radial nach außen erstreckt, und erste und zweite Scheiben (26, 28) die in abnehmbarer Weise am ersten und zweiten Ringflansch (23b, 23c) des dritten Elementes (23) befestigt sind, wobei jede der zwei ebenen ringförmigen Teile (25b, 25c) der Membran (25) zwischen einer der ersten und zweiten Scheibe (26, 28) und dem entsprechenden Ringflansch des dritten Elementes (23) eingeklemmt sind.

8. Form nach den Ansprüchen 6 und 7, dadurch gekennzeichnet, daß das erste Element (3) einen vorspringenden Teil (3a) umfaßt, der in die Mittelöffnung des ersten Flanschringes (23b) des dritten Elementes (23) eng eingepaßt ist, wobei der vorspringende Teil (3a) und die Mittelöffnung eine kegelstumpfförmige Form aufweisen, die dieselbe Konizität aufweist wie einer (25d) der zwei kegelstumpfförmigen Teile (25d, 25c) der Membran (25), die sandwichförmig zwischen dem vorspringenden Teil (3a) und dem ersten Flansch (23b) sandwichartig ergriffen ist.

9. Form nach einem der Ansprüche 3 bis 8, gekennzeichnet durch einen in ihrer zylindrischen Seitenwand vorgesehenen Durchgang (32, 33, 34), dessen eines Ende in der Ringkammer (31) mit veränderlichem Volumen mündet und dessen anderes Ende (bei 35) an eine Vakuumquelle anschließbar ist.

10. Form nach den Ansprüchen 7 und 9, dadurch gekennzeichnet, daß der Durchgang gebildet ist durch eine erste radiale Durchbrechung bzw. Bohrung (32) in dem zylindrischen Teil (23a) des dritten Elementes (23), durch eine Ringkammer (33), die zwischen dem zweiten und dritten Element (21, 23) vorgesehen ist, und durch eine zweite radiale Bohrung (34) in dem zweiten Element (21).

## Claims

1. Implement capable of moulding itself to an opthalmic lense surface, consisting of a rigid base (2) and a deformable pad (1) mounted on the base, characterised by the base (2) having a cavity (5) on one of its faces, by the pad (1) consisting of two elastically deformable membranes (7 and 8), secured at the edges to the sides of the cavity (5), at some distance from the bottom of the latter and forming a void (9) between them which is filled with an incompressible material (11), in the form of small granules, and tie base (2) also having a passage (12) whose one extremity opens into the said void (9) and whose other extremity can be connected to a vacuum (15).

2. Self moulding implement as per claim 1, characterised by the incompressible granular material (11) consisting of marbles with a diameter of between 0.5 mm and 3.5 mm.

3. Self moulding implement as per claim 2, characterised by the marbles (11) having a diameter of 1 mm.

4. Self moulding implement as per any of the claims 1 to 3, characterised by the marbles being made of glass or metal.

5. Self moulding implement as per claim 1, characterised by the incompressible granular material (11) consisting of sand.

6. Self moulding implement as per any of the claims 1 to 5, characterised by the membranes (7 and 8) consisting of an elastic material.

7. Self moulding implement as per claim 6, characterised by the membranes (7 and 8) consisting of latex.

8. Self moulding implement as per claim 7, characterised by the membranes (7 and 8) having a thickness of between 0.5 mm and 1 mm.

9. Self moulding implement as per any of the claims 1 to 8, characterised by the base (2) having a passage (18), whose one extremity opens into the said cavity (5) between the bottom of the latter and the membrane closest to it (7) and whose other extremity can be connected either to a vacuum (15) or to a compressed air pump (24).

10. Self moulding implement as per claim 9, characterised by the base (2) consisting of one component (2a) in the shape of a cup and a second and third component (2b and 2c) in the shape of rings of the same diameter as the first component, all three components being fixed concentrically with each other, where one (7) of the two membranes is clamped along its edge between the first and second component (2b and 2c), the other membrane (8) being clamped by its edge between the second and third elements (2b and 2c) and in that the two passages (12 and 18) perforate radially the first and second components respectively.

FIG_1

36

L

S

1

24

25c

29  28

23c

25e

d

II  II

25

37

34

37

25a

35

23

23a

31

32

22

23b

3a

8

25d

25b

21

27

26

33

18

14

12

7

17

5

3

19

15

9

13

2

11

6

16

4

FIG_2

25a

38

L

37

38

25